# EUROPEAN PATENT SPECIFICATION

(11) **EP 0 728 811 B1**
(45) Date of publication and mention of the grant of the patent: **17.09.2003**
(21) Application number: 96102668.9
(22) Date of filing: 22.02.1996
(51) Int. Cl.: C08L 69/00, C08K 5/5399

(54) **Flame retardant thermoplastic resin composition**
Hammhemmende thermoplastische Harzzusammensetzung
Compositions de résine thermoplastique ignifuge

(30) Priority: 27.02.1995 JP 3846295
(43) Date of publication of application: 28.08.1996
(73) Proprietor: Mitsubishi Chemical Corporation, Chiyoda-ku, Tokyo (JP)
(72) Inventor: Maruyama, Kazunori, Yokkaichi-shi, Mie (JP); Motoshige, Ryoichi, Yokkaichi-shi, Mie (JP)
(74) Representative: Hansen, Bernd, Dr. Dipl.-Chem.

(56) References cited:
- EP-A- 0 417 839
- US-A- 3 332 905
- US-A- 4 094 856
- ALLEN C W: "THE USE OF PHOSPHAZENES AS FIRE RESISTANT MATERIALS" JOURNAL OF FIRE SCIENCES, vol. 11, no. 4, 1 July 1993, pages 320-328, XP000405978

## Description

This invention relates to a thermoplastic resin composition excellent in flame retardance. More particularly, it relates to a thermoplastic resin composition excellent in flame retardance, impact resistance, and processability which contains neither bromine nor chloride, but comprises an aromatic polycarbonate, a rubber-reinforced styrene resin, and a phenoxy phosphazene and may optionally comprise polytetrafluoroethylene (hereinafter abbreviated as PTFE).

Resin compositions comprising an aromatic polycarbonate and a rubber-reinforced styrene resin has been used in appliances, official automation equipment, business and office machines for their excellent molding processability, mechanical characteristics, or appearance. Resins to be used in such application are required to have flame retardance for fear of heat generation or fire of the internal parts. To this effect, the resin compositions generally contain organic compounds containing a halogen atom such as bromine or chlorine as flame retardant, but incorporation of these flame retardant is apt to give rise to problems, such as reduction in heat stability and mold corrosion due to decomposition gas evolved on molding. In addition, the toxicity of low-molecular weight bromine compounds or chlorine compounds which are produced on processing or combustion is an unfavorable problem to be considered in safety and hygiene. Therefore, a flame retardant resin composition substantially free from bromine or chlorine compounds, more desirably, substantially free from all the halogen compounds has been demanded.

Addition of phosphorus compounds, such as phosphoric esters, to a resin mixture of an aromatic polycarbonate and a rubber-reinforced styrene resin has been proposed for imparting flame retardance. For example, European Patent No. 174493 discloses a resin composition comprising a resin mixture of an aromatic polycarbonate and a rubber-reinforced styrene resin, having incorporated therein triphenyl phosphate and PTFE, and Dutch Patent No. 8802346 discloses a resin composition comprising a resin mixture of an aromatic polycarbonate and a rubber-reinforced styrene resin, having incorporated therein a phosphoric ester oligomer and PTFE. However, the phosphoric esters used have a low melting point and poor compatibility with the resins, the resulting resin compositions suffer from various physical and processing problems, such as reduction in heat resistance and oozing of the phosphoric ester on molding to contaminate the mold. Further, techniques of mixing various thermoplastic resins with crystalline powdered aromatic diphosphate type flame retardants have been suggested as disclosed in JP-A-5-1079 (the term "JP-A" as used herein means an "unexamined published Japanese patent application") and U.S. Patent 5,122,556. However, the suggested techniques proved to still fail to satisfy both physical properties and processability. Further, because the phosphoric esters which can be used in these techniques have plasticizing action to the resins, it is essential that PTFE is used as a drip inhibitor (which prevents a fire source from dripping on combustion) -in those techniques as described above. Accordingly, a flame retardant resin composition substantially free from a halogen atom has not been obtained.

JP-A-6-100785 discloses a technique of suppressing drips on combustion of a flame retardant resin composition comprising a thermoplastic resin and a phosphoric ester or red phosphorus by addition of silicone resin and a phosphazene. And yet it is not clear, still less predictable, whether addition of a phosphazene to a mixture of an aromatic polycarbonate and a rubber-reinforced styrene resin provides- a resin composition excellent in both flame retardance and physical properties.

EP-0 417 839 A1 describes a flame retardant thermoplastic composition comprising a flame retardant amount of phospham having the empirical formula (PN₂H)ₓ. The thermoplastic comprises one or more polymers selected from styrene-containing copolymers, polyolefins and polyamides.

An object of the present invention is to provide a resin composition freed of the above-mentioned problems, i.e., a resin composition comprising a phosphorus compound, an aromatic polycarbonate, and a rubber-reinforced styrene resin which exhibits excellent flame retardance as well as excellent physical properties and processability.

As a result of extensive investigations for solving the aforesaid problems, the inventors of the present invention have found that a flame retardant resin composition having excellent molding processability and physical properties can be obtained by compounding a resin mixture of an aromatic polycarbonate and a rubber-reinforced styrene resin with a phenoxy phosphazene and, if desired, PTFE, and that when the content of the aromatic polycarbonate is high in the mixture of the aromatic polycarbonate and the rubber-reinforced styrene resin in the above flame retardant resin composition, even if PTFE is not always added as a drip inhibitor, a flame retardant resin composition substantially free from a halogen atom which is excellent in flame retardance, molding processability and physical properties can be obtained.

The present invention consists in a thermoplastic resin composition having excellent flame retardance comprising 100 parts by weight of a resin mixture consisting of (A) 40 to 90 parts by weight of an aromatic polycarbonate, (B) 1 to 60 parts by weight of a graft copolymer prepared by graft copolymerizing an aromatic vinyl monomer and a monomer copolymerizable with the aromatic vinyl monomer in the presence of a rubbery polymer, and (C) 0 to 40 parts by weight of a copolymer prepared by copolymerizing an aromatic vinyl monomer and a monomer copolymerizable with the aromatic vinyl monomer and (D) 1 to 30 parts by weight of a phenoxy phosphazene.

The present invention consists in the above thermoplastic resin composition having excellent flame retardance in which the composition further comprises 0.05 to 1.0 part by weight of (E) polytetrafluoroethylene per 100 parts by weight of the resin mixture consisting of components (A), (B), and (C).

The present invention also consists in the above thermoplastic resin composition having excellent flame retardance in which the rubbery polymer in the graft copolymer (B) is a conjugated diene-based rubbery polymer.

Aromatic polycarbonate (A) which can be used in the present invention is an aromatic dihydroxy compound-based homopolycarbonate or copolycarbonate. In particular, bisphenol A type polycarbonate having a weight average molecular weight of 17000 to 30000 which is synthesized from bisphenol A and phosgene is preferred.

Graft copolymer (B) which can be used in the present invention is one obtained by graft copolymerization of a monomer mixture comprising 60 to 90% by weight of an aromatic vinyl monomer and 10 to 40% by weight of a monomer copolymerizable with the aromatic vinyl monomer in the presence of a rubbery polymer having a glass transition point of not higher than 0°C, preferably not higher than -20°C.

In order for the resin composition of the present invention to have excellent physical properties, flame retardance and processability, it is preferred that the rubber component in graft copolymer (B) has a weight average particle size of 0.10 to 1.50 µm and that the rubber content in graft copolymer (B) be 15 to 70% by weight. If the rubber particle size or the rubber content is lower than the respective lower limit, the resulting resin tends to have reduced impact resistance. If they exceed the respective upper limit, the resulting resin tends to have reduced flame retardance.

The rubbery polymer used in graft copolymer (B) has a glass transition point of not higher 0°C, preferably not higher than -20°C. Examples of such rubbery polymers include polybutadiene, polyisoprene, and conjugated diene-based rubbery polymers comprising butadiene and/or isoprene and other copolymerizable monomers.

Examples of the aromatic vinyl monomer constituting the graft copolymer are styrene, and styrene derivatives such as α-alkylstyrene (e.g., α-methylstyrene), nuclear-substituted alkylstyrene (e.g., p-methylstyrene and vinyltoluene) and vinylnaphthalene. These monomers may be used either individually or as a mixture of two or more thereof.

Examples of the monomer copolymerizable with the aromatic vinyl monomer include vinyl cyanide monomers, such as acrylonitrile and methacrylonitrile; (meth)acrylic monomers, such as acrylic acid, methacrylic acid and alkyl esters thereof; and acid anhydride monomers or derivatives thereof, such as maleic anhydride and an imide thereof. These copolymerizable monomers may be used either individually or as a mixture of two or more thereof.

The proportion of the aromatic vinyl monomer in the monomer mixture to be used in the preparation of graft copolymer (B) ranges from 60 to 90% by weight. If it exceeds 90% by weight, heat resistance, impact resistance, etc. of the resulting resin composition are reduced. If it is less than 60% by weight, the compatibility of graft copolymer (B) with other resins changes, and the resulting resin composition has reduced physical properties and a deteriorated hue.

Specific examples of graft copolymers (B) include an acrylonitrile-butadiene-styrene copolymer (ABS resin), a methyl methacrylate-butadiene-styrene copolymer (MBS resin), a methyl methacrylate-acrylonitrile-butadiene-styrene copolymer (MABS resin), and mixtures thereof.

Graft copolymer (B) can be prepared from the above-mentioned monomer mixture and conjugated diene-based rubbery polymer by a known process, such as emulsion polymerization, suspension polymerization, solution polymerization or bulk polymerization, either in a batch system or a continuous system.

Copolymer (C) which can be used in the present invention is one comprising 60 to 90% by weight of an aromatic vinyl monomer component and 10 to 40% by weight of a component derived from a monomer copolymerizable with the aromatic vinyl monomer.

The aromatic vinyl monomer, a constituent component of copolymer (C), includes styrene; α-alkylstyrenes, e.g., α-methylstyrene; and nucleus-substituted alkylstyrenes, e.g., p-methylstyrene and vinyltoluene; and vinylnaphthalene. These monomers may be used either individually or as a mixture of two or more thereof.

The copolymerizable monomer, another constituent component of copolymer (C), includes vinyl cyanide monomers, e.g., acrylonitrile and methacrylonitrile; (meth)acrylic monomers, such as acrylic acid, methacrylic acid and alkyl esters thereof; and acid anhydride monomers or derivatives thereof, such as maleic anhydride and an imide thereof. These copolymerizable monomers may be used either individually or as a mixture of two or more thereof.

The proportion of the aromatic vinyl monomer component in copolymer (C) ranges from 60 to 90% by weight, preferably 70 to 90% by weight. If it exceeds 90% by weight, heat resistance, impact resistance, etc. of the resulting resin composition are reduced. If it is less than 60% by weight, the compatibility of copolymer (C) with other resins changes, and the resulting resin composition has reduced physical properties and a deteriorated hue.

Copolymer (C) can be prepared in accordance with a technique known for production of acrylonitrile-styrene copolymers, such as emulsion polymerization, suspension polymerization, solution polymerization or bulk polymerization, either in a batch system or a continuous system. Copolymer (C) may be prepared simultaneously with the polymerization for the production of graft copolymer (B) in the same polymerization system, or may be prepared by a separate polymerization method under separately set conditions.

The present invention applies to a resin mixture comprising aromatic polycarbonate (A), graft copolymer (B) and copolymer (C). If applied to aromatic polycarbonate (A) alone or a mixture of graft copolymer (B) and copolymer (C), the present invention fails to achieve sufficient flame retardance and physical properties. It is essential that the resin mixture to be rendered flame retardant by the present invention should consist of 40 to 90% by weight, preferably 60 to 90% by weight, of aromatic polycarbonate (A), 1 to 60% by weight, preferably 1 to 40% by weight, of graft copolymer (B), and 0 to 40% by weight of copolymer (C). Should the above proportions of components (A), (B) and (C) be out of the specific ranges, sufficient flame retardance and satisfactory physical properties cannot be obtained. When the proportion of the aromatic polycarbonate (A) is within the range of from 60 to 90% by weight, even if PTFE is not always added, a flame retardance can be improved to the degree capable of fulfilling the standard V-0 according to an UL94 vertical flame test. Accordingly, a flame retardant resin composition substantially free from a halogen atom such as chlorine and fluorine can be obtained, which is most preferred.

If desired, the resin composition of the present invention may contain other resins. Examples of usable other resins include polybutylene terephthalate (PBT) and polyethylene terephthalate (PET).

The phenoxyphosphazene (D) which can be used in the present invention includes linear phosphazenes represented by formula (I) shown below and/or cyclic phosphazenes represented by formula (II) shown below, which are described, e.g., in Studies in Inorganic Chemistry 6 Phosphorus, 3rd Ed., Elsevier. 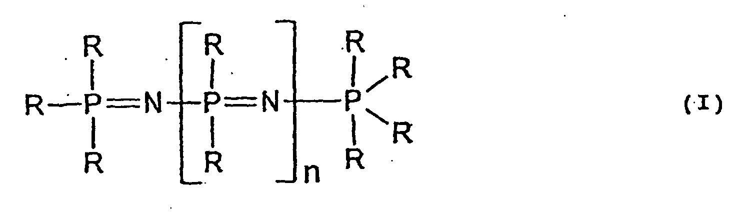 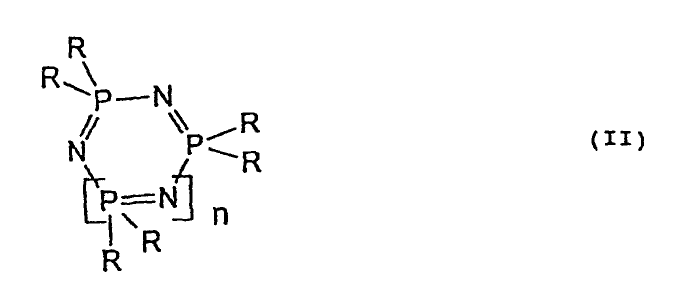 wherein n represents 0 or an integer of 1 to 15, preferably an integer of 1 to 10; and R represents a functional group arbitrarily selected from an alkyl group, an aryl group, an alkoxy group, an aryloxy group, an amino group or a hydroxyl group (the alkoxy or aryloxy group may be substituted with an alkyl group, an aryl group, an amino group, a hydroxyl group, etc.), wherein at least one group R is a phenoxy group.

Specific examples of the phenoxy phosphazene which can be used in the present invention are phenoxy-phosphazene, or methylphenoxyphosphazene.

Phenoxyphosphazene is particularly preferred for ease in synthesis and easy availability. The phosphazene may be used either individually or as a mixture of two or more thereof. A mixture of a cyclic phenoxy phosphazene and a linear phenoxy phosphazene may also be employable. The functional groups represented by R per molecule of the phenoxy phosphazene to be used in the present invention may be all the same or be made up of two or more different kinds of functional groups. A phosphazene prepared by substituting a part of the molecule with a phenoxy group followed by substituting another part of the molecule with a propoxy group, i.e., phenoxypropoxy-phosphazene may be mentioned as an example of such a mixed substituted phosphazene. Commercially available phosphazene is generally synthesized by substituting chlorophosphazene with a phenol compound.

Phenoxyphosphazene (D) is added in an amount of 1 to 30 parts by weight, preferably 10 to 25 parts by weight, per 100 parts by weight of the mixture of aromatic polycarbonate (A), graft copolymer (B), and copolymer (C). Addition of more than 30 parts by weight of phenoxy phosphazene (D) is not only economically disadvantageous but results in reduction in impact resistance and heat resistance of the resulting resin composition. If the amount of phenoxy phosphazene (D) is less than 1 part by weight, the resulting resin composition has reduced flame retardance.

In particular, when the content of aromatic polycarbonate (A) is low in the composition, addition of 0.05 to 1.0 part by weight of PTFE (E) to the above resin composition per 100 parts by weight of the resin mixture of components (A), (B), and (C) is effective to suppress drips of the resin composition on combustion (drippings of a fire source) thereby bringing about further improvements in flame retardance as well as physical properties. Commercially available PTFE resins may be used. PTFE resins having a fibrous crystal form are preferred.

The resin composition of the present invention can be obtained by weighing out the above-specified amounts of aromatic polycarbonate (A), graft copolymer ( B ) , copolymer (C), phenoxy phosphazene (D), and PTFE (E) and mixing and kneading them in a conventional manner. For example, a mixture of these components in the form of powders, beads, flakes or pellets is melt-kneaded in an extruder, such as a single-screw extruder or a twin-screw extruder, or a kneading machine, such as a Banbury mixer, a pressure kneader , or a two-roll mill. Where compounding of a liquid component is required, a known liquid pouring device is used, and the mixture is kneaded by the above method. If desired, additives for resins of the kinds and amounts appropriately decided so as not to impair the properties of the resin composition may be added here. Such additives include lubricants, parting agents, colorants, antioxidants, antistatic agents, flame retardants other than those described above, ultraviolet absorbers, light stabilizers, heat stabilizers, fillers, such as talc, and reinforcing materials, such as glass fiber and carbon fiber.

The present invention will now be illustrated in greater detail with reference to Examples.

Measurement in the Examples and Comparative Examples was made in accordance with the methods described below. All the parts are by weight unless otherwise indicated.

### Flexural Modulus :

Measured in accordance with JIS-K7203-1973.

### Izod Impact Strength:

Measured at 23°C in accordance with JIS-K7110-1971. Taken as an index of impact resistance. Specimen thickness: 1/8 inch, V-notched.

### Melt Flow Rate:

Measured at 240°C under a load of 10 kg in accordance with JIS-K7210-1976. Taken as an index of flowability.

### Heat Distortion Temperature:

Measured in accordance with JIS-K7207-1974. Taken as an index of heat resistance.

### Limiting Oxygen Index:

Measured in accordance with JIS-K7201-1972. Taken as an index of flame retardance.

### Combustion Test:

A vertical flame test was conducted as specified in UL94. Taken as an index of flame retardance. Specimen thickness: 1,59 mm (1/16 inch).

### (1) Aromatic Polycarbonate (A)

Commercially available polycarbonate resins NOVAREX 7022A and 7030A, produced by Mitubishi Engineering Plastics Co., Ltd., were used.

### (2) Preparation of Graft Copolymer (B)

In a 5 ℓ reaction vessel equipped with a stirrer, a heating and cooling apparatus, and feeders for raw materials and additives were charged 100 parts, on a solid basis, of a polybutadiene-based rubber latex having been swollen with acetic anhydride to a particle size of 0.25 µm and 270 parts (inclusive of the water content of the latex) of deionized water, and the mixture was heated to 70°C. When the temperature reached 60°C, 45 parts of water having dissolved therein 1.0 part of sodium pyrophosphate, 0.5 part of dextrose, and 0.01 part of ferrous sulfate was added. From the time when the temperature reached 70°C, 70 parts of styrene, 30 parts of acrylonitrile, 1.1 part of t-dodecylmercaptan, 0.5 part of cumene hydroperoxide, 1.8 part of disproportionated potassium rosinate soap, 0.37 part of potassium hydroxide, and 35 parts of deionized water were added over a period of 2.5 hours. After the addition, the reaction was continued for an additional period of 30 minutes and cooled to complete the reaction.

To the resulting graft copolymer latex was added 5 parts of an antioxidant, and the mixture was added to an aqueous solution of magnesium sulfate heated to 95°C while stirring to solidify. The solid was washed with water and dried to obtain a graft copolymer resin composition as white powder.

### (3) Copolymer (C)

A styrene-acrylonitrile copolymer (AS resin) having a styrenestyrene/acrylonitrile weight ratio of 70/30 and a weight average molecular weight of 120,000 was used.

### (4) Phenoxy Phosphazene (D)

Commercially available phenoxyphosphazene P-3800, produced by Nippon Soda Co., Ltd., was used. The structural formula of P-3800 is shown below, in which n represents an integer of 1 or 2. Commercially available phenoxyphosphazene P-3800 is a mixture of the compounds represented by the following formula wherein n represents 1 and 2, respectively.

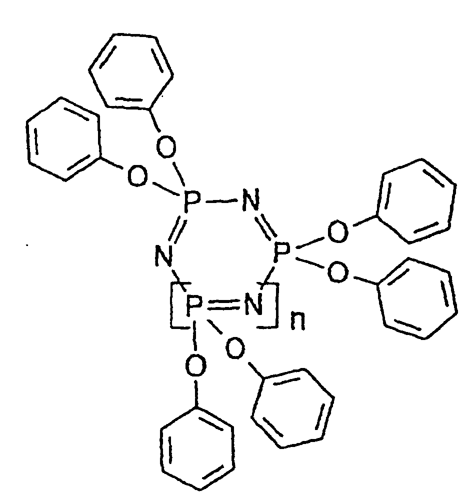

### (5) Polytetrafluoroethylene (E)

Commercially available PTFE, F-201, produced by Daikin Industries, Ltd. was used.

### (6) Trixylenyl Phosphate (F)

For comparison, commercially available trixylenyl phosphate having the following formula, PX-130 produced by Daihachi Kagaku K.K., was used.

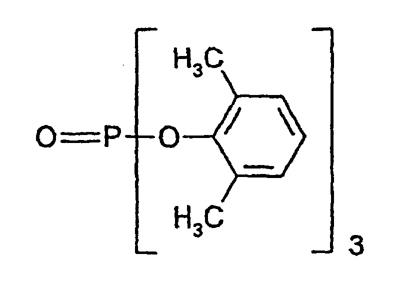

### (7) Phosphoric Ester Oligomer (G)

For comparison, a commercially available phosphoric ester oligomer having the following formula, CR-733S produced by Daihachi Kagaku K.K., was used. 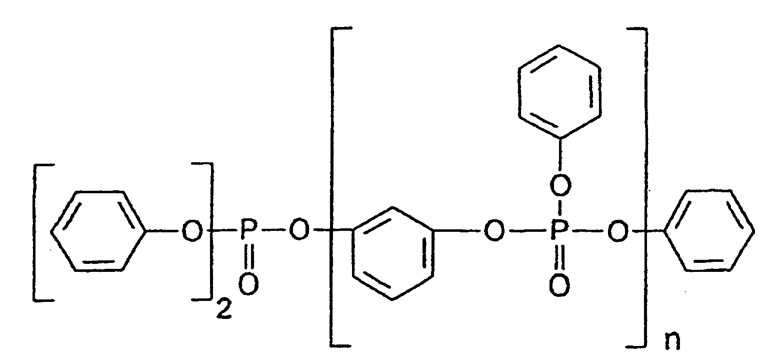 wherein n represents an integer of 1 to 4. Commercially available phosphoric ester oligomer is a mixture of the compounds represented by the above formula wherein n represents 1, 2, 3 and 4, respectively.

### EXAMPLES 1 TO 6 AND COMPARATIVE EXAMPLES 1 TO 4

The above-described aromatic polycarbonate (A), graft copolymer (B), copolymer (C), phosphazene (D), and PTFE (E) were weighted according to the compounding ratio shown in Table 1 below (given by part by weight) and mixed in a tumbling mixer. The resulting mixture was kneaded in a vented twin screw extruder while removing the volatile matter to prepare pellets of the resin composition.

The pellets were injection molded to prepare various specimens. The specimens were subjected to measurement of flexural modulus, Izod impact strength, heat distortion temperature, and limiting oxygen index, and subjected to an UL94 vertical flame test. The results obtained are shown in Table 1.

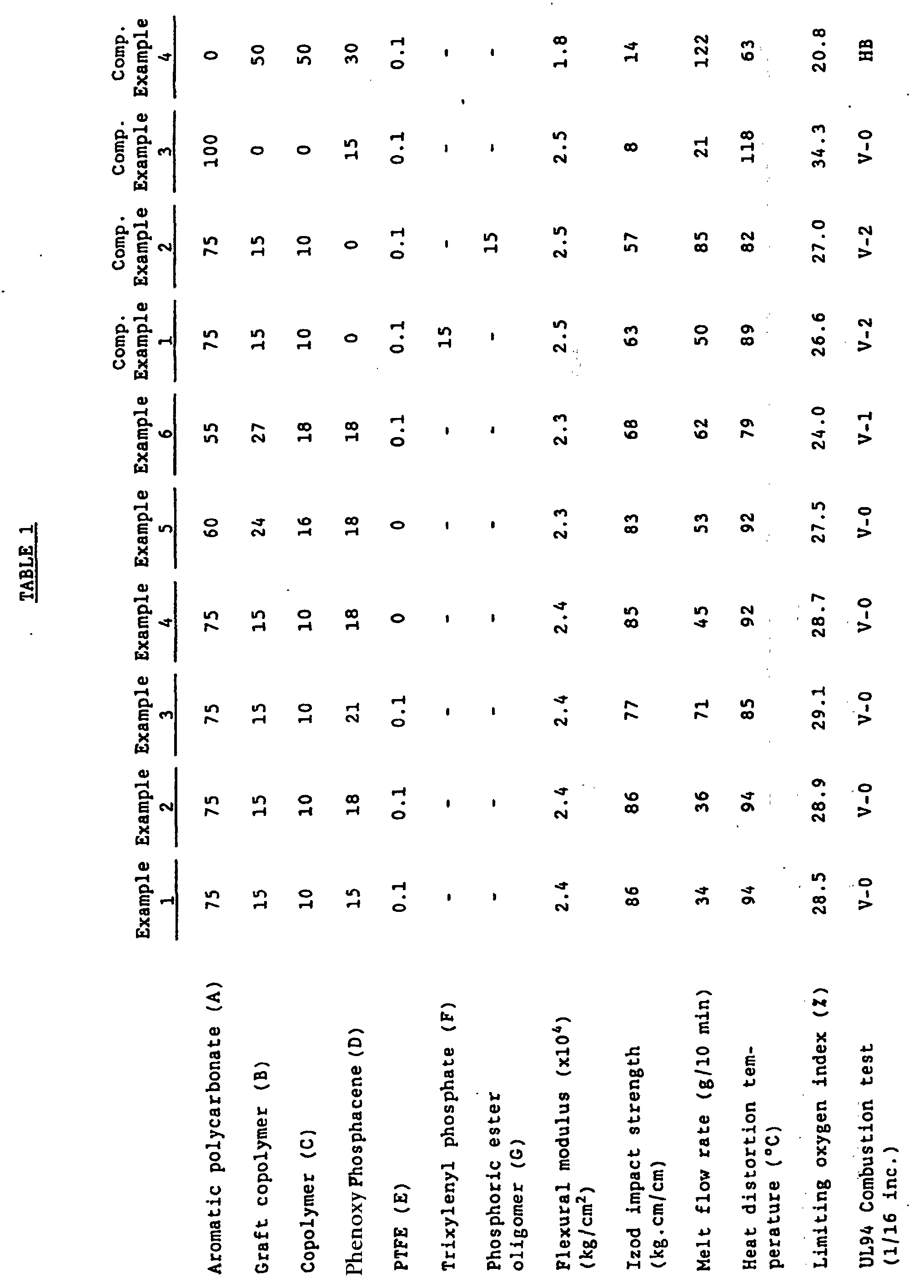

It is seen from Table 1 that the resin compositions according to the present invention (Examples 1 to 6), prepared from an optimized formulation of the constituent resin components and the phenoxy phosphazene, exhibited markedly excellent flame retardance, impact resistance, and heat resistance in good balance. Further, it is seen from Table 1 that the resin compositions according to the present invention (Examples 4 and 5), with the proportion of aromatic polycarbonate (A) in a mixture of aromatic polycarbonate (A), graft copolymer (B) and copolymer (C) being 75% by weight or 60% by weight, exhibited high flame retardance improved to the degree capable of fulfilling the standard V-0 according to the UL94 vertical flame test without adding PTFE, by which the flame retardant resin compositions substantially free from a halogen atom such as chlorine and fluorine could be obtained. On the other hand, the resin compositions containing a phosphoric ester compound as a flame retardant (Comparative Examples 1 and 2) had low flame retardance and low heat resistance. Where in using only aromatic polycarbonate (A) as a base resin (Comparative Example 3), the impact resistance and flowability were considerably reduced. Where in using a mixture of graft copolymer (B) and copolymer (C) (Comparative Example 4) as a base resin, the standard of flame retardance could not be fulfilled.

Comprising aromatic polycarbonate (A), graft copolymer (B), copolymer (C), and phenoxy phosphazene (D), the resin composition of the present invention exhibits markedly excellent flame retardance, impact resistance, physical properties and processability. The resin composition can be made use of as bromine- and chlorine-free flame retardant thermoplastic resin material and is of extremely high industrial value.

## Claims

1. A thermoplastic resin composition comprising 100 parts by weight of a resin mixture consisting of (A) 40 to 90 parts by weight of an aromatic polycarbonate, (B) 1 to 60 parts by weight of a graft copolymer prepared by graft copolymerizing an aromatic vinyl monomer and a monomer copolymerizable with the aromatic vinyl monomer in the presence of a rubbery polymer, and (C) 0 to 40 parts by weight of a copolymer prepared by copolymerizing an aromatic vinyl monomer and a monomer copolymerizable with the aromatic vinyl monomer and (D) 1 to 30 parts by weight of phenoxyphosphazene.

2. The thermoplastic resin composition according to claim 1, wherein said composition further comprises 0.05 to 1.0 part by weight of (E) polytetrafluoroethylene per 100 parts by weight of said resin mixture consisting of components (A), (B) and (C).

3. The thermoplastic resin composition having excellent flame retardance according to claim 1 or 2, wherein said rubbery polymer in the graft copolymer (B) is a conjugated diene-based rubbery polymer.

4. The thermoplastic resin composition according to any one of the claims 1 to 3, wherein said aromatic. polycarbonate (A) is added in an amount of 60 to 90 parts by weight.

5. The thermoplastic resin composition according to any one of the claims 1 to 4, wherein said graft polymer (B) is added in an amount of 1 to 40 parts by weight.

6. The thermoplastic resin composition according to any one of the claims 1 to 5, wherein said phenoxyphosphazene (D) is added in an amount of 10 to 23 parts by weight per 100 parts by weight of said resin mixture consisting of components (A), (B) and (C).

7. Use of thermoplastic resin composition as defined in any one of the claims 1 to 6 as a flame retardant.

## Patentansprüche

1. Thermoplastische Harzzusammensetzung, umfassend 100 Gew.-Teile einer Harzmischung, bestehend aus (A) 40 bis 90 Gew.-Teilen eines aromatischen Polycarbonats, (B) 1 bis 60 Gew.-Teilen eines Pfropfcopolymers, hergestellt durch Pfropfcopolymerisieren eines aromatischen Vinylmonomers und eines mit dem aromatischen Vinylmonomer copolymerisierbaren Monomers in Gegenwart eines gummiartigen Polymers, und (C) 0 bis 40 Gew.-Teilen eines Copolymers, hergestellt durch Copolymerisieren eines aromatischen Vinylmonomers und eines mit dem aromatischen Vinylmonomer copolymerisierbaren Monomers, und (D) 1 bis 30 Gew.-Teilen Phenoxyphosphazen.

2. Thermoplastische Harzzusammensetzung gemäss Anspruch 1, worin die Zusammensetzung ferner 0,05 bis 1,0 Gew.-Teile von (E) Polytetrafluorethylen pro 100 Gew.-Teilen der Harzmischung, bestehend aus Komponenten (A), (B) und (C), umfasst.

3. Thermoplastische Harzzusammensetzung mit hervorragender Flammhemmung gemäss Anspruch 1 oder 2, worin das gummiartige Polymer im Pfropfcopolymer (B) ein konjugiertes, gummiartiges Polymer auf Dienbasis ist.

4. Thermoplastische Harzzusammensetzung gemäss einem der Ansprüche 1 bis 3, worin das aromatische Polycarbonat (A) in einer Menge von 60 bis 90 Gew.-Teilen zugegeben wird.

5. Thermoplastische Harzzusammensetzung gemäss einem der Ansprüche 1 bis 4, worin das Pfropfpolymer (B) in einer Menge von 1 bis 40 Gew.-Teilen zugegeben wird.

6. Thermoplastische Harzzusammensetzung gemäss einem der Ansprüche 1 bis 5, worin das Phenoxyphosphazen (D) in einer Menge von 10 bis 23 Gew.-Teilen pro 100 Gew.-Teilen der Harzmischung, bestehend aus Komponenten (A), (B) und (C), zugegeben wird.

7. Verwendung einer thermoplastischen Harzzusammensetzung gemäss einem der Ansprüche 1 bis 6 als Flammhemmstoff.

## Revendications

1. Composition de résine thermoplastique comprenant 100 parties en poids d'un mélange de résine se composant (A) de 40 à 90 parties en poids d'un polycarbonate aromatique, (B) de 1 à 60 parties en poids d'un copolymère greffé préparé par copolymérisation par greffage d'un monomère de vinyle aromatique et d'un monomère copolymérisable avec le monomère de vinyle aromatique en présence d'un polymère caoutchouteux, et (C) de 0 à 40 parties en poids d'un copolymère préparé en copolymérisant un monomère de vinyle aromatique et un monomère copolymérisable avec le monomère de vinyle aromatique et (D) de 1 à 30 parties en poids de phénoxyphosphazène.

2. Composition de résine thermoplastique selon la revendication 1, dans laquelle ladite composition comprend en outre 0,05 à 1,0 partie en poids de (E) polytétrafluoréthylène pour 100 parties en poids dudit mélange de résine consistant en les composants (A), (B) et (C) .

3. Composition de résine thermoplastique ayant une excellente propriété ignifuge selon la revendication 1 ou 2, dans laquelle ledit polymère caoutchouteux dans le copolymère greffé (B) est un polymère caoutchouteux à base de diène conjugué.

4. Composition de résine thermoplastique selon l'une quelconque des revendications 1 à 3, dans laquelle ledit polycarbonate aromatique (A) est ajouté dans une quantité allant de 60 à 90 parties en poids.

5. Composition de résine thermoplastique selon l'une quelconque des revendications 1 à 4, dans laquelle ledit polymère greffé (B) est ajouté dans une quantité de 1 à 40 parties en poids.

6. Composition de résine thermoplastique selon l'une quelconque des revendications 1 à 5, dans laquelle ledit phénoxyphosphazène (D) est ajouté dans une quantité de 10 à 23 parties en poids pour 100 parties en poids dudit mélange de résine consistant en les composants (A), (B) et (C) .

7. Utilisation de la composition de résine thermoplastique selon l'une quelconque des revendications 1 à 6, en tant qu'ignifuge.
